# EUROPEAN PATENT APPLICATION

(11) **EP 4 478 580 A1**
(43) Date of publication of application: **18.12.2024**
(21) Application number: 23753190.0
(22) Date of filing: 09.02.2023
(51) Int. Cl.: H02J 7/00, H01M 10/44, H01M 10/42

(54) **BATTERY CELL CHARGING METHOD AND CHARGING APPARATUS**

(30) Priority: 11.02.2022 KR 20220018477; 17.10.2022 KR 20220133592
(71) Applicant: LG Energy Solution, Ltd., Seoul 07335 (KR)
(72) Inventor: PARK, Ji Won, Daejeon 34122 (KR); KWON, Hyun Cheol, Daejeon 34122 (KR); SON, Chan Hee, Daejeon 34122 (KR); DOH, Sung Kwan, Daejeon 34122 (KR); PARK, Pil Kyu, Daejeon 34122 (KR)
(74) Representative: Goddar, Heinz J.
(86) International application number: PCT/KR2023/001938
(87) International publication number: WO 2023/153843

(57) **Abstract**

A battery cell charging method according to an embodiment of the present disclosure relates to a plurality of battery cells connected in series. The battery cell charging method includes charging the plurality of battery cells with a first constant current, and cutting off the first constant current for a battery cell reaching a predetermined set voltage, and charging the plurality of battery cells with a second constant current lower than the first constant current when the first constant current is cut off for the plurality of battery cells, and cutting off the second constant current for a battery cell reaching the set voltage again.

## Description

### TECHNICAL FIELD

### Cross-reference to Related Applications

This application claims the benefit of Korean Patent Application Nos. 10-2022-0018477, filed on February 11, 2022, and 10-2022-0133592, filed on October 17, 2022, in the Korean Intellectual Property Office, the disclosures of which are incorporated herein in their entirety by reference.

### Technical Field

The present invention relates to a charging method and a charging system for a battery cell, and more particularly, to a charging method and a charging system for charging a plurality of battery cells connected in series.

### BACKGROUND ART

With the increased technology development and demand for mobile devices and the expanding spread of electric vehicles or the like, demand for secondary batteries as an energy source is rapidly increasing, and among them, demand for lithium secondary batteries having a high capacity and energy density is particularly high.

In general, a secondary battery is manufactured by inserting an electrode assembly composed of a negative electrode, a positive electrode, and a separator into a cylindrical or prismatic metal can or a pouch-type case of an aluminum laminate sheet, and injecting an electrolyte solution into the electrode assembly. The secondary battery manufactured in this way may fulfil its battery function only when the battery is activated by carrying out predetermined charging and discharging, and this process is referred to as a formation process or an activation process.

A charger/discharger used in the activation process charges and discharges the battery cell according to a predetermined recipe (electrical electrodes for charging and discharging, or the like). Each battery cell is determined to be good or bad and sorted according to a result of charge/discharge operation characteristics, and thus the activation process is very important.

The charger/discharger in the related art has charged battery cells with a constant current-constant voltage (CC-CV) recipe. Charging according to this CC-CV recipe (hereinafter referred to as "CC-CV charging") is a method of initially applying a constant current to the battery cell so that the battery cell is rapidly charged to a set voltage, and then continuously reducing the current while applying a constant voltage so that the battery cell maintains the set voltage.

When each battery cell is individually charged, CC-CV charging may accurately charge the battery cell to a set voltage, and thus has an advantage of high charging accuracy.

However, in a mass production process of secondary batteries, it is preferable that the charger/discharger simultaneously charges and discharges a plurality of battery cells to increase productivity. In particular, in order to reduce the production cost of the charger/discharger and reduce an area of a charge/discharge chamber, there is a need to introduce a series-type charger/discharger capable of simultaneously charging and discharging a plurality of battery cells connected in series.

When the series-type charger/discharger performs CC-CV charging, the time taken to complete charging of a plurality of battery cells increases, and a voltage distribution of the plurality of fully charged battery cells becomes very large, resulting in poor charging accuracy.

### [Citation List]

KR 10-2014-0117923A (October 8, 2014)
KR 10-2014-0134925A (November 25, 2014)

### DISCLOSURE OF THE INVENTION

### TECHNICAL PROBLEM

An aspect of the present disclosure provides a charging method and charging system for a battery cell capable of shortening charging time and improving charging accuracy.

### TECHNICAL SOLUTION

According to an aspect of the present disclosure, there is provided a battery cell charging method for a plurality of battery cells connected in series. The battery cell charging method includes charging the plurality of battery cells with a first constant current, and cutting off the first constant current for a battery cell reaching a predetermined set voltage, and charging the plurality of battery cells with a second constant current lower than the first constant current when the first constant current is cut off for the plurality of battery cells, and cutting off the second constant current for a battery cell reaching the set voltage again.

A time for charging the plurality of battery cells with the first constant current may be longer than a time for charging the plurality of battery cells with the second constant current.

A time for charging the plurality of battery cells with the first constant current may be 90% or more of a time required to complete charging of the plurality of battery cells.

A drop from the first constant current to the second constant current may be made in a stepwise manner.

The battery cell charging method may further include charging the plurality of battery cells with a third constant current lower than the second constant current when the second constant current is cut off for the plurality of battery cells, and cutting off the third constant current for a battery cell reaching the set voltage.

In the charging with the first constant current, the first constant current may be cut off earlier for one battery cell of the plurality of battery cells than for other battery cells, and in the charging with the second constant current, the second constant current may be cut off later for the one battery cell than for the other battery cells.

A voltage distribution between the plurality of battery cells immediately after the second constant current is cut off for the plurality of battery cells may be smaller than a voltage distribution between the plurality of battery cells immediately after the first constant current is cut off for the plurality of battery cells.

According to another aspect of the present disclosure, there is provided a battery cell charging system for a plurality of battery cells connected in series. The battery cell charging system includes a charging circuit that charges the plurality of battery cells with a constant current, a voltage sensor that measures a voltage of each of the battery cells, a relay switch that bypasses the constant current so that the constant current is cut off for each battery cell when the voltage of the battery cell measured through the voltage sensor reaches a preset set voltage, and a controller that controls the charging circuit to recharge the plurality of battery cells by dropping the constant current when the constant current is cut off for the plurality of battery cells.

The charging circuit may drop the constant current in a stepwise manner.

The charging circuit may drop the constant current at least three times until charging of the plurality of battery cells is completed.

The constant current may be cut off for at least some of the plurality of battery cells at different timings.

A voltage distribution between the plurality of battery cells may decrease whenever a drop of the constant current occurs in the charging circuit.

### ADVANTAGEOUS EFFECTS

According to a preferred embodiment of the present disclosure, the time required to complete charging of a plurality of battery cells may be reduced, and a voltage distribution between the plurality of fully charged battery cells may be uniform.

In addition, a correlation between a capacity measured by discharging a plurality of battery cells charged according to a preferred embodiment of the present disclosure and an actual capacity measured by individually charging and discharging each battery cell may be increased. In this way, reliability of pass/fail determination and selection of each battery cell may be improved.

In addition to the above, effects that can be easily predicted by those skilled in the art from configurations according to preferred embodiments of the present disclosure may be included.

### BRIEF DESCRIPTION OF THE DRAWINGS

The following drawings attached to the specification illustrate preferred examples of the present disclosure by example, and serve to enable technical concepts of the present disclosure to be further understood together with detailed description of the disclosure given below, and therefore the present disclosure should not be interpreted only with matters in such drawings.
FIG. 1 is a schematic circuit diagram of a battery cell charging system according to an embodiment of the present disclosure.
FIG. 2 is a flowchart of a battery cell charging method according to another embodiment of the present disclosure.
FIG. 3 is a current characteristic diagram of a plurality of battery cells charged by the battery cell charging method shown in FIG. 2.
FIG. 4 is a voltage characteristic diagram of the plurality of battery cells charged by the battery cell charging method shown in FIG. 2.
FIG. 5 is a graph illustrating voltage distributions of a plurality of battery cells charged by battery cell charging methods according to Experimental Example of the present disclosure and Comparative Example.
FIG. 6 is a graph illustrating a correlation between a measurement capacity and an actual capacity of a battery cell charged by the battery cell charging method according to Experimental Example of the present disclosure.

### MODE FOR CARRYING OUT THE INVENTION

Hereinafter, preferred embodiments of the present disclosure will be described in detail with reference to the accompanying drawings so that those skilled in the art may easily carry out the present disclosure. However, the present disclosure may be implemented in various different forms and is neither limited nor restricted by the following embodiments.

In order to clearly illustrate the present disclosure, detailed descriptions of parts not related to the description or techniques known in the art that may unnecessarily obscure the subject matter of the present disclosure are omitted, and in the specification, when reference numerals are given to components in each of the drawings, the same or similar components will be designated by the same or similar reference numerals through the specification.

In addition, terms or words used in this specification and claims should not be restrictively interpreted as ordinary meanings or dictionary-based meanings, but should be interpreted as meanings and concepts conforming to the scope of the present disclosure on the basis of the principle that an inventor can properly define the concept of a term to describe and explain his or her invention in the best ways.

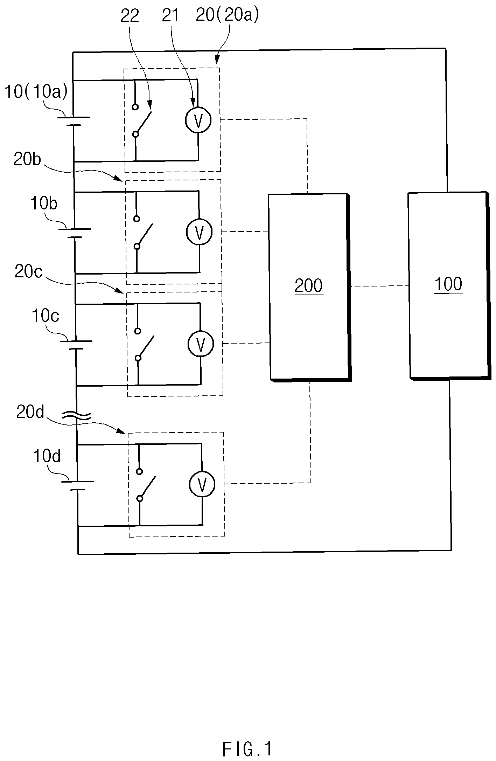

FIG. 1 is a schematic circuit diagram of a battery cell charging system according to an embodiment of the present disclosure.

The battery cell charging system (hereinafter referred to as a "charging system") according to one embodiment of the present disclosure may charge a plurality of battery cells 10 connected in series. The charging system may be a component included in a series-type charger/discharger. However, the charging system is not limited thereto.

The charging system may include a charging circuit 100 for charging the plurality of battery cells 10 with a constant current, a regulating circuit 20 for regulating current flowing to the battery cells 10 based on the voltage of the battery cells 10, and a controller 200 for controlling the charging circuit 100 and the regulating circuit 20.

The charging circuit 100 may include a power supply or be connected to an external power supply. The charging circuit 100 may be configured to supply a constant current to the plurality of battery cells 10. The charging circuit 100 may be configured to vary the magnitude of constant current supplied to the plurality of battery cells 10.

The configuration of the charging circuit 100 is not limited. Since the charging circuit 100 is a well-known technology, those skilled in the art are capable of easily configuring the charging circuit 100 using a plurality of electrical elements.

For example, the charging circuit 100 may include a plurality of resistors connected in parallel and having different sizes, and a plurality of switches connected in series with the plurality of resistors. In this case, the magnitude of current flowing by the power supply having a constant voltage may be varied by changing a combination of the plurality of resistors determined according to on/off of the plurality of switches.

A plurality of regulating circuits 20 corresponding to the plurality of battery cells 10 may be provided. The numbers of battery cells 10 and regulating circuits 20 are not limited.

For example, the plurality of battery cells 10 may include a first battery cell 10a, a second battery cell 10b, a third battery cell 10c, and a fourth battery cell 10d, which are sequentially connected in series. The plurality of regulating circuits 20 may include a first regulating circuit 20a for regulating current flowing to the first battery cell 10a based on a voltage of the first battery cell 10a, a second regulating circuit 20b for regulating current flowing to the second battery cell 10b based on a voltage of the second battery cell 10b, a third regulating circuit 20c for regulating current flowing to the third battery cell 10c based on a voltage of the third battery cell 10c, and a fourth regulating circuit 20d for regulating current flowing to the fourth battery cell 10d based on a voltage of the fourth battery cell 10d.

Each regulating circuit 20 may regulate current based on the voltage of each battery cell 10. The regulating circuits 20 may be connected in parallel to the respective battery cells 10.

Each regulating circuit 20 may include a voltage sensor 21 and a relay switch 22. The voltage sensor 21 and the relay switch 22 each may be connected in parallel to the battery cell.

The voltage sensor 21 may measure the voltage of the battery cell 10.

The relay switch 22 may bypass the constant current so that the constant current is cut off for the battery cell 10 when the voltage of the battery cell 10 measured through the voltage sensor 21 reaches a preset set voltage.

The controller 200 may include at least one processor. The controller 200 may control the charging circuit 100 to adjust the magnitude of constant current supplied by the charging circuit 100.

The controller 200 may control on/off of the relay switch 22 based on the measured voltage of each voltage sensor 21. More specifically, the controller 200 may bypass the constant current so that the constant current is cut off for the battery cell 10 by closing the relay switch 22 when the voltage of the battery cell 10 measured through the voltage sensor 21 reaches the preset set voltage.

Even though the plurality of battery cells 10 have the same capacity in design, actually, a slight difference in capacity may occur during a plurality of processes for manufacturing the battery cells 10. Accordingly, at least some of the plurality of battery cells 10 may reach a set voltage at different timings. That is, in the plurality of battery cells 10, the constant current may be cut off at different timings.

A voltage drop may occur in the battery cell 10 for which the constant current is cut off. Accordingly, a voltage distribution may occur between battery cells for which the constant current is cut off at different timings. In order to increase charging accuracy, it is desirable to reduce such a voltage distribution as much as possible.

To this end, the controller 200 may control the charging circuit 100 to recharge the plurality of battery cells 10 by dropping the constant current when the constant current is cut off for the plurality of battery cells 10. The drop of the constant current supplied from the charging circuit 100 may be made in a stepwise manner.

In more detail, when all of the plurality of battery cells 10 reach a predetermined set voltage and the constant current is cut off, the controller 200 may drop the constant current supplied by the charging circuit 100 and open all the relay switches 22 so that the dropped constant current flows to all the battery cells 10.

Then, the controller 200 may bypass the dropped constant current so that the dropped constant current is cut off for the battery cells 10 by closing the relay switches 22 when the voltage of the battery cells 10 measured through the voltage sensor 21 reach the set voltage again.

The controller 200 may control the charging circuit 100 to recharge the plurality of battery cells 10 by further dropping the dropped constant current when the dropped constant current is cut off for the plurality of battery cells 10.

As a series of processes in which the plurality of battery cells 10 reach the set voltage, the constant current is cut off, and the charging circuit 100 drops the constant current to resume charging the plurality of battery cells 10 are repeated, the voltage distribution between the plurality of battery cells 10 may be reduced. That is, the voltage distribution between the plurality of battery cells 10 may decrease whenever a drop of the constant current occurs in the charging circuit 100.

The above series of processes may be repeated a preset number of times to complete charging of the plurality of battery cells 10. Preferably, the above series of processes may be repeated at least three times. That is, the charging circuit 100 may drop the constant current at least three times until charging of the plurality of battery cells 10 is completed. In this way, the voltage distribution between the plurality of battery cells 10 may be sufficiently reduced and charging accuracy may be improved.

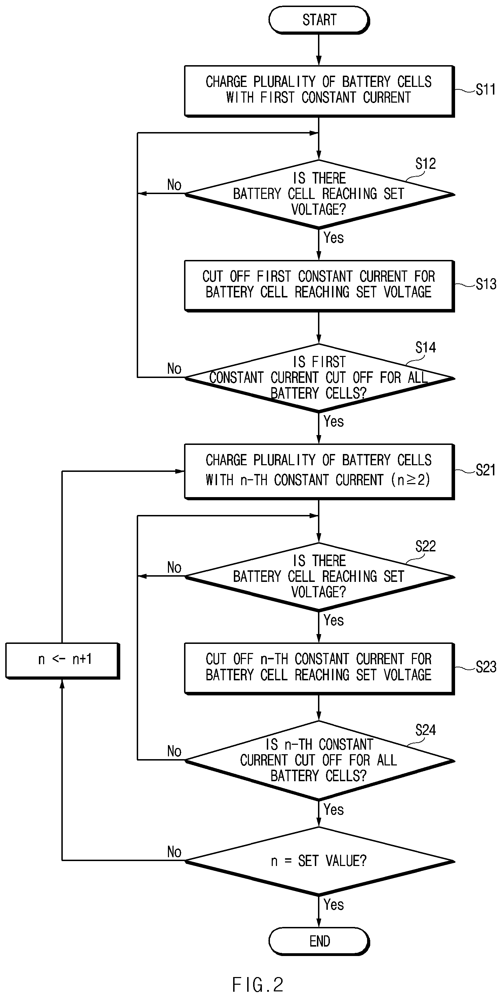

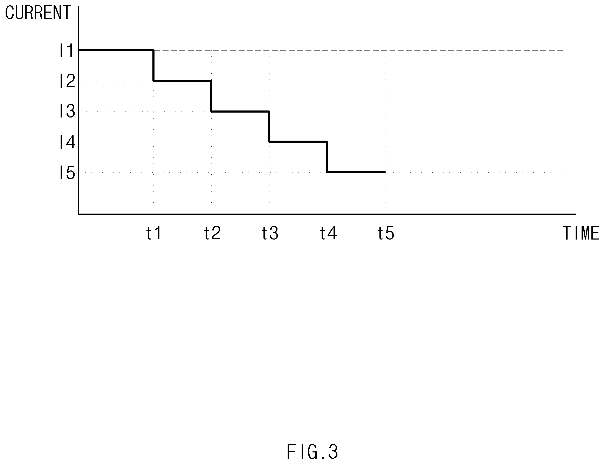

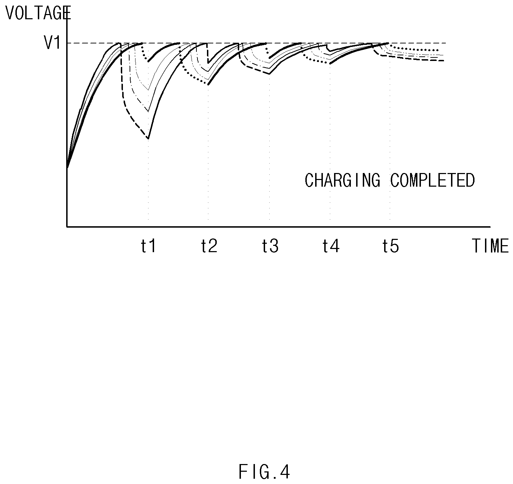

FIG. 2 is a flowchart of a battery cell charging method according to another embodiment of the present disclosure, FIG. 3 is a current characteristic diagram of a plurality of battery cells charged by the battery cell charging method shown in FIG. 2, and FIG. 4 is a voltage characteristic diagram of the plurality of battery cells charged by the battery cell charging method shown in FIG. 2.

Hereinafter, a battery cell charging method performed by the aforementioned charging system will be described as another embodiment of the present disclosure.

The battery cell charging method (hereinafter referred to as a "charging method") according to the other embodiment of the present disclosure may charge the plurality of battery cells 10 connected in series.

The charging method may include charging the plurality of battery cells 10 with a first constant current I1 and cutting off the first constant current I1 for a battery cell 10 reaching a preset set voltage V1 (hereinafter referred to as a "first charging step"), and charging the plurality of battery cells 10 with a second constant current I2 lower than the first constant current I1 when the first constant current I1 is cut off for the plurality of battery cells 10 and cutting off the second constant current I2 for a battery cell 10 reaching the set voltage V1 again (hereinafter referred to as a "second charging step").

The charging method may further include charging the plurality of battery cells 10 with a third constant current I3 lower than the second constant current I2 when the second constant current I2 is cut off for the plurality of battery cells 10 and cutting off the third constant current I3 for a battery cell 10 reaching the set voltage V1 (hereinafter referred to as a "third charging step"). Those skilled in the art will be able to easily understand that the charging method may further include a fourth charging step, a fifth charging step, and so on.

FIGS. 3 and 4 show a case in which the charging method includes the first to fifth charging steps as an example.

In a current characteristic diagram of FIG. 3, it is shown that the first constant current I1 to the fifth constant current I5 applied to the plurality of battery cells 10 decrease in a stepwise manner.

In a voltage characteristic diagram of FIG. 4, an aspect is shown in which the voltages of the four battery cells 10 increase while each of the constant currents I1 to I5 is applied and a voltage drop occurs by the constant currents I1 to I5 being cut off when each battery cell 10 reaches the set voltage V1. In the voltage characteristic diagram of FIG. 4, a solid line indicates a voltage change of each battery cell 10 while the constant currents I1 to I5 are applied, and a dotted line indicates a voltage change of each battery cell 10 while the constant currents I1 to I5 are cut off.

Hereinafter, the first charging step will be described. The first charging step may be a section before "t1" in times displayed in FIGS. 3 and 4.

The charging circuit 100 may charge the plurality of battery cells 10 with the first constant current I1 (S11). Accordingly, the voltage of each battery cell 10 may continuously increase and may reach the preset set voltage V1. However, as described above, since at least some of the plurality of battery cells 10 have different capacities, at least some of the plurality of battery cells 10 may reach the set voltage V1 at different timings.

The controller 200 may determine whether there is a battery cell 10 reaching the set voltage V1, and may cut off the first constant current I1 for the battery cell 10 reaching the set voltage V1 (S12) (S13). More specifically, the controller 200 may determine whether each battery cell 10 reaches the set voltage V1 by the voltage sensor 21 that senses the voltage of each battery cell 10. The controller 200 may cut off the first constant current I1 for the battery cell 10 reaching the set voltage V1 by controlling the relay switch 22 so that the first constant current I1 bypasses the battery cell 10 reaching the set voltage V1. Accordingly, a voltage drop may occur in the battery cell 10 for which the first constant current I1 is cut off.

Since at least some of the plurality of battery cells 10 reach the set voltage V1 at different timings, for at least some of the plurality of battery cells 10, the first constant current I1 may be cut off at different timings. As the battery cell 10 reaches the set voltage V1 earlier, a time during which the first constant current I1 is cut off increases, and thus a greater voltage drop may occur.

Hereinafter, for convenience of description, a case in which the capacity increases from the first battery cell 10a toward the fourth battery cell 10d will be described as an example. From the first battery cell 10a toward the fourth battery cell 10d, the time required to reach the set voltage V1 may increase and the first constant current I1 may be cut off later. Accordingly, at a point in time when the first charging step ends, a smaller voltage drop may occur from the first battery cell 10a toward the fourth battery cell 10d. As such, since the degree of voltage drop varies among the plurality of battery cells 10, a voltage distribution may occur between the plurality of battery cells 10 at the point in time when the first charging step ends.

In order to reduce the voltage distribution, the second charging step may be performed.

Hereinafter, the second charging step will be described. The second charging step may be a section between "t1" and "t2" in times displayed in FIGS. 3 and 4.

When the first constant current I1 is cut off for all of the plurality of battery cells 10, the charging circuit 100 may charge the plurality of battery cells 10 with the second constant current I2 (S21, n=2). A drop from the first constant current I1 to the second constant current I2 may be made in a stepwise manner.

Accordingly, the voltage of each battery cell 10 in which the voltage drop has occurred may increase again and reach the set voltage V1 again.

Since at least some of the plurality of battery cells 10 have a difference in the amount of voltage drop that has occurred in the first charging step, at least some of the plurality of battery cells 10 may reach the set voltage V1 again at different timings.

The controller 200 may determine whether there is a battery cell 10 reaching the set voltage V1 again, and may cut off the second constant current I2 for the battery cell 10 reaching the set voltage V1 (S22) (S23) (n=2). More specifically, the controller 200 may determine whether each battery cell 10 reaches the set voltage V1 again by the voltage sensor 21 that senses the voltage of each battery cell 10. The controller 200 may cut off the second constant current I2 for the battery cell 10 reaching the set voltage V1 by controlling the relay switch 22 so that the second constant current I2 bypasses the battery cell 10 reaching the set voltage V1. Accordingly, a voltage drop may occur in the battery cell 10 for which the second constant current I2 is cut off.

Since at least some of the plurality of battery cells 10 reach the set voltage V1 again at different timings, for at least some of the plurality of battery cells 10, the second constant current I2 may be cut off at different timings.

More specifically, since the amount of voltage drop of a battery cell 10 for which the first constant current I1 is cut off earlier in the first charging step is greater, the battery cell 10 may reach the set voltage V1 later in the second charging step. That is, in the first charging step, the first constant current I1 may be cut off for one battery cell 10 earlier than in other battery cells 10, and in the second charging step, for the one battery cell 10, the second constant current I2 may be cut off later than for the other battery cells 10.

For example, at a point in time when the first charging step ends, a smaller voltage drop occurs from the first battery cell 10a toward the fourth battery cell 10d; whereas, in the second charging step, the time required to reach the set voltage V1 may be shortened from the first battery cell 10a toward the fourth battery cell 10d, and the second constant current I2 may be quickly cut off. Accordingly, at the point in time when the second charging step ends, a greater voltage drop may occur from the first battery cell 10a toward the fourth battery cell 10d, as opposed to the point in time when the first charging step ends.

However, the voltage distribution between the plurality of battery cells 10 may decrease at the point in time when the second charging step ends as compared to the point in time when the first charging step ends. This is because the voltage of each battery cell 10 is higher at a start point in time of the second charging step than at a start point in time of the first charging step, and thus the time taken for the plurality of battery cells 10 to reach the set voltage V1 again in the second charging step is shorter than the time taken for the plurality of battery cells 10 to reach the set voltage V1 in the first charging step.

In order to further reduce the voltage distribution, the third charging step may be performed.

Hereinafter, the third charging step will be described. The third charging step may be a section between "t2" and "t3" in times displayed in FIGS. 3 and 4.

When the second constant current I2 is cut off for all of the plurality of battery cells 10, the charging circuit 100 may charge the plurality of battery cells 10 with the third constant current I3 (S21, n=3). A drop from the second constant current I2 to the third constant current I3 may be made in a stepwise manner.

Accordingly, the voltage of each battery cell 10 in which the voltage drop has occurred may increase again and reach the set voltage V1 again.

Since at least some of the plurality of battery cells 10 have a difference in the amount of voltage drop that has occurred in the second charging step, at least some of the plurality of battery cells 10 may reach the set voltage V1 again at different timings.

The controller 200 may determine whether there is a battery cell 10 reaching the set voltage V1 again, and may cut off the third constant current I3 for the battery cell 10 reaching the set voltage V1 (S22) (S23) (n=3). More specifically, the controller 200 may determine whether each battery cell 10 reaches the set voltage V1 again by the voltage sensor 21 that senses the voltage of each battery cell 10. The controller 200 may cut off the third constant current I3 for the battery cell 10 reaching the set voltage V1 by controlling the relay switch 22 so that the third constant current I3 bypasses the battery cell 10 reaching the set voltage V1. Accordingly, a voltage drop may occur in the battery cell 10 for which the third constant current I3 is cut off.

Since at least some of the plurality of battery cells 10 reach the set voltage V1 again at different timings, for at least some of the plurality of battery cells 10, the third constant current I3 may be cut off at different timings.

More specifically, since the amount of voltage drop of a battery cell 10 for which the second constant current I2 is cut off earlier in the second charging step is greater, the battery cell 10 may reach the set voltage V1 later in the third charging step. That is, in the second charging step, the second constant current I2 may be cut off for one battery cell 10 earlier than in other battery cells 10, and in the third charging step, for the one battery cell 10, the third constant current I3 may be cut off later than for the other battery cells 10.

For example, at the point in time when the second charging step ends, a greater voltage drop occurs from the first battery cell 10a toward the fourth battery cell 10d; whereas, in the third charging step, the time required to reach the set voltage V1 may be increased from the first battery cell 10a toward the fourth battery cell 10d, and the third constant current I3 may be cut off later. Accordingly, at a point in time when the third charging step ends, a smaller voltage drop may occur from the first battery cell 10a toward the fourth battery cell 10d, as opposed to the point in time when the first charging step ends.

However, the voltage distribution between the plurality of battery cells 10 may further decrease at the point in time when the second charging step ends as compared to the point in time when the second charging step ends. This is because the voltage of each battery cell 10 is higher at a start point in time of the third charging step than at the start point in time of the second charging step, and thus the time taken for the plurality of battery cells 10 to reach the set voltage V1 again in the third charging step is shorter than the time taken for the plurality of battery cells 10 to reach the set voltage V1 again in the second charging step.

In the charging method, the charging of the plurality of battery cells 10 may be completed by repeating the charging step a predetermined number of times n. For example, when the charging step is repeated three times, the charging method may include first to third charging steps.

For another example, when the charging step is repeated five times, the charging method may include first to fifth charging steps. Those skilled in the art will be able to easily understand the fourth and fifth charging steps from the description of the first to third charging steps above.

By repeating the charging step, the voltage distribution between the plurality of battery cells 10 may be reduced and charging accuracy may be improved.

Meanwhile, as the charging step is repeated, a duration of each charging step may be shortened. This is because the amount of voltage drop of each battery cell 10 decreases as the charging step is repeated, and thus the time taken to reach the set voltage from the dropped voltage again is shortened. It should be noted that "t1" to "t5" displayed in FIGS. 3 and 4 do not reflect such a time difference and are displayed uniformly for better understanding.

A duration (t1) of the first charging step may be longer than a duration (t2-t1) of the second charging step. More specifically, the time t1 for charging the plurality of battery cells 10 with the first constant current I1 may be longer than the time t2-t1 for charging the plurality of battery cells 10 with the second constant current I2.

In addition, the duration (t2-t1) of the second charging step may be longer than a duration (t3-t2) of the third charging step. More specifically, the time t2-t1 for charging the plurality of battery cells 10 with the second constant current I2 may be longer than the time t3-t2 for charging the plurality of battery cells 10 with the third constant current I3.

Meanwhile, the first charging step may be a step for quickly charging the plurality of battery cells 10, and the steps after the first charging step (the second charging step, the third charging step, and so on) may be steps for reducing the voltage distribution between the plurality of battery cells 10.

The duration (t1) of the first charging step may be 90% or more of the time required to complete charging of the plurality of charges. More specifically, the time t1 for charging the plurality of battery cells 10 with the first constant current I1 may be 90% or more of the time required to complete charging of the plurality of battery cells 10.

For example, when the charging method includes the first to fifth charging steps, the duration (t1) of the first charging step may be 90% or more of the sum of the duration (t1) of the first charging step, the duration (t2-t1) of the second charging step, the duration (t3-t2) of the third charging step, the duration (t4-t3) of the fourth charging step, and the duration (t5-t4) of the fifth charging step.

Since the first charging step of charging the plurality of battery cells 10 with the largest constant current, that is, the first constant current I1, occupies most of the entire charging process, the plurality of battery cells 10 may be quickly charged, and the time taken to complete charging may be reduced.

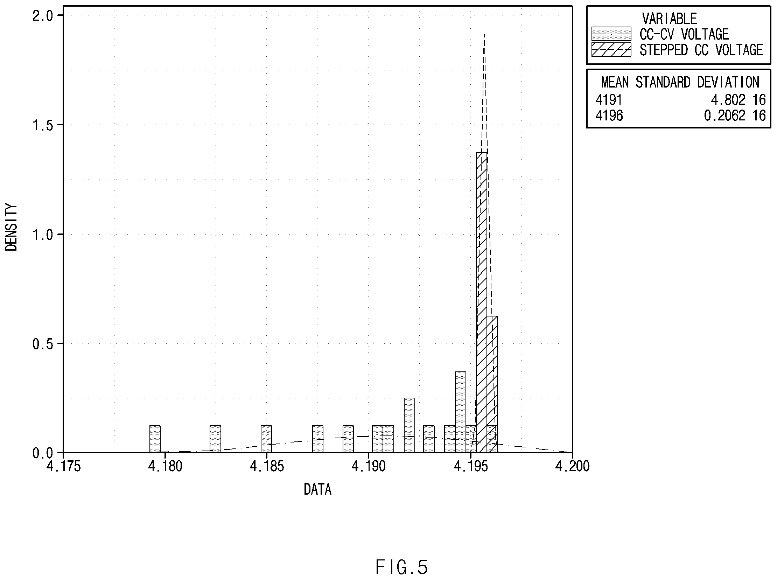

FIG. 5 is a graph illustrating voltage distributions of a plurality of battery cells charged by battery cell charging methods according to Experimental Example of the present disclosure and Comparative Example.

For the charging method according to Experimental Example of the present disclosure, the contents described above are used.

The charging method according to Comparative Example may refer to a constant current-constant voltage (CC-CV) charging recipe. Since the CC-CV charging recipe is a related art, it will be briefly described.

According to the CC-CV charging recipe, when a constant current is applied to a plurality of battery cells connected in series and any one battery cell reaches a set voltage, a constant voltage may be applied to the plurality of battery cells thereafter. The constant voltage may be a voltage that allows each battery cell to maintain the set voltage, and may vary depending on which the battery cell is set as a reference. That is, the charging method according to Comparative Example may include a plurality of steps of applying a constant voltage set based on each battery cell, and the number of the plurality of steps may correspond to the number of the plurality of battery cells. For this reason, as the number of battery cells connected in series increases, the total charging time may increase.

A current flowing to the battery cell to which the constant voltage is applied may continuously decrease.

For a battery cell that has become the reference for setting the constant voltage in each step, current may be cut off in a subsequent step. Therefore, as charging continues, the number of battery cells to which current is applied decreases. However, a voltage drop occurs in the battery cell for which current is cut off while other battery cells are being charged. For this reason, at a point in time when charging of the plurality of battery cells ends, a voltage distribution between the plurality of battery cells may be very large.

In Experimental Example of the present disclosure and Comparative Example, the set voltage is 4.2 V, the number of battery cells is 16, and each battery cell is a cylindrical battery having a form factor of 4680. Here, the form factor refers to a value representing a diameter and height of the cylindrical battery. In the figures representing the form factor, the first two numbers represent the diameter of the battery, and the following numbers represent the height of the battery. That is, each battery cell is a cylindrical battery having a diameter of about 46 mm and a height of about 80 mm.

"CC-CV voltage" in FIG. 5 is data representing a plurality of battery cells charged by the charging method according to Comparative Example for each final voltage, and "stepped CC voltage" is data representing a plurality of battery cells charged by the charging method according to Experimental Example of the present disclosure for each final voltage. Further, "density" of FIG. 5 represents a ratio of the number of battery cells having a corresponding final voltage among the plurality of battery cells. That is, a higher density at a specific voltage may mean a greater number of battery cells with the final voltage of the specific voltage.

Referring to FIG. 5, it can be seen that final voltages of the plurality of battery cells charged by the charging method according to Comparative Example are variously distributed and have a large voltage distribution, whereas final voltages of the plurality of battery cells charged by the charging method according to Experimental Example of the present disclosure are concentrated in a narrow range (approximately, around 4.196 V) and have a small voltage distribution.

Quantitatively, it was confirmed that the voltage distribution (standard deviation) of the plurality of battery cells charged by the charging method according to Comparative Example is 4.802, whereas the voltage distribution (standard deviation) of the plurality of battery cells charged by the charging method according to E experimental Example of the present disclosure was 0.2062, which is an improvement of approximately 23 times.

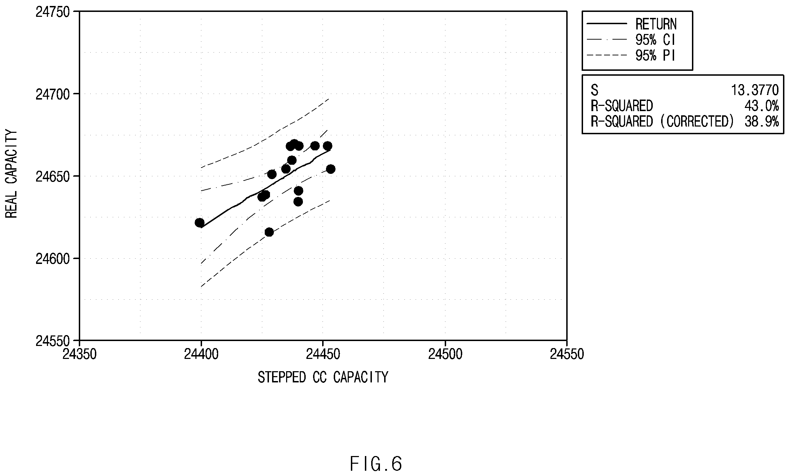

FIG. 6 is a graph illustrating a correlation between a measurement capacity and an actual capacity of the battery cell charged by the battery cell charging method according to Experimental Example of the present disclosure.

A "real capacity" of FIG. 6 may refer to a capacity (hereinafter referred to as "actual capacity") measured by individually charging each battery cell with a constant current-constant voltage and then discharging the charged battery cell. In addition, a "stepped CC capacity" may be a capacity (hereinafter referred to as a "first measurement capacity") measured by charging a plurality of battery cells connected in series by the charging method according to Experimental Example of the present disclosure and then discharging the battery cells.

In the case of mass production of battery cells, the higher the correlation between the measurement capacity and the actual capacity, the more reliable the determination as to whether the battery cells pass or fail and sorting of the battery cells.

Referring to FIG. 6, it can be seen that the first measurement capacity has a positive correlation with the actual capacity. Quantitatively, it was confirmed that a coefficient of determination (R-squared) between the first measurement capacity and the actual capacity is 43.0%.

On the other hand, it was confirmed that, although not shown in the figure, the coefficient of determination between a capacity (hereinafter referred to as a "second measurement capacity") measured by charging a plurality of battery cells connected in series by the charging method according to Comparative Example and then discharging the charged battery cells and the actual capacity is 0.3%.

That is, it was confirmed that the first measurement capacity is 43%, which is an improvement of approximately 143 times compared to the second measurement capacity of 0.3%.

In conclusion, the correlation between the capacity measured by discharging a plurality of battery cells charged according to the present disclosure and the actual capacity measured by individually charging and discharging each battery cell may be increased. In this way, reliability of pass/fail determination and selection of each battery cell may be improved.

The above description is merely illustrative of the technical idea of the present disclosure, and those of ordinary skill in the art to which the present disclosure pertains will be able to make various modifications and variations without departing from the essential characteristics of the present disclosure.

Accordingly, the embodiments disclosed in the present disclosure are not intended to limit the technical idea of the present disclosure, but to explain the technical idea, and the scope of the technical idea of the present disclosure is not limited by these embodiments.

The scope of protection of the present disclosure should be interpreted by the accompanying claims, and all technical ideas within the scope equivalent thereto should be construed as being included in the scope of the present disclosure.

### [Description of the Symbols]

- 10:: Battery cell
- 20:: Regulating circuit
- 21:: Voltage sensor
- 22:: Relay switch
- 100:: Charging circuit
- 200:: Controller

## Claims

1. A battery cell charging method for a plurality of battery cells connected in series, the battery cell charging method comprising:
charging the plurality of battery cells with a first constant current, and cutting off the first constant current for a battery cell reaching a predetermined set voltage; and
charging the plurality of battery cells with a second constant current lower than the first constant current when the first constant current is cut off for the plurality of battery cells, and cutting off the second constant current for a battery cell reaching the set voltage again.

2. The battery cell charging method of claim 1, wherein a time for charging the plurality of battery cells with the first constant current is longer than a time for charging the plurality of battery cells with the second constant current.

3. The battery cell charging method of claim 1, wherein a time for charging the plurality of battery cells with the first constant current is 90% or more of a time required to complete charging of the plurality of battery cells.

4. The battery cell charging method of claim 1, wherein a drop from the first constant current to the second constant current is made in a stepwise manner.

5. The battery cell charging method of claim 1, further comprising:
charging the plurality of battery cells with a third constant current lower than the second constant current when the second constant current is cut off for the plurality of battery cells, and cutting off the third constant current for a battery cell reaching the set voltage.

6. The battery cell charging method of claim 1, wherein, in the charging with the first constant current, the first constant current is cut off earlier for one battery cell of the plurality of battery cells than for other battery cells, and
wherein, in the charging with the second constant current, the second constant current is cut off later for the one battery cell than for the other battery cells.

7. The battery cell charging method of claim 1, wherein a voltage distribution between the plurality of battery cells immediately after the second constant current is cut off for the plurality of battery cells is smaller than a voltage distribution between the plurality of battery cells immediately after the first constant current is cut off for the plurality of battery cells.

8. A battery cell charging system for a plurality of battery cells connected in series, the battery cell charging system comprising:
a charging circuit configured to charge the plurality of battery cells with a constant current;
a voltage sensor configured to measure a voltage of each of the battery cells;
a relay switch configured to bypass the constant current so that the constant current is cut off for each battery cell when the voltage of the battery cell measured through the voltage sensor reaches a preset set voltage; and
a controller configured to control the charging circuit to recharge the plurality of battery cells by dropping the constant current when the constant current is cut off for the plurality of battery cells.

9. The battery cell charging system of claim 8, wherein the charging circuit drops the constant current in a stepwise manner.

10. The battery cell charging system of claim 8, wherein the charging circuit drops the constant current at least three times until charging of the plurality of battery cells is completed.

11. The battery cell charging system of claim 8, wherein the constant current is cut off for at least some of the plurality of battery cells at different timings.

12. The battery cell charging system of claim 8, wherein a voltage distribution between the plurality of battery cells decreases whenever a drop of the constant current occurs in the charging circuit.
